# EUROPEAN PATENT APPLICATION

(11) **EP 4 471 548 A1**
(43) Date of publication of application: **04.12.2024**
(21) Application number: 24179434.6
(22) Date of filing: 31.05.2024
(51) Int. Cl.: G06F 3/01, A63F 13/00, G02B 27/01, G06F 3/03, G06F 3/04847

(54) **ARTIFICIAL REALITY BASED PROCESSING OF MEDIA DATA USING A CONTROLLER, IN PARTICULAR A MIDI CONTROLLER**

(30) Priority: 02.06.2023 US 202363505867 P; 22.12.2023 US 202318394899
(71) Applicant: algoriddim GmbH, 80539 München (DE)
(72) Inventor: Morsy, Kariem, 80539 München (DE); Tessmann, Federico, 80539 München (DE)
(74) Representative: Weickmann & Weickmann PartmbB

(57) **Abstract**

The present inventio provides a system for processing media signals, comprising a controller having at least one control element to be operated by a user to set an operating mode of the controller, a media processing unit for processing a media signal depending on the operating mode of the controller, and an artificial reality apparatus adapted to provide visual input for the user to create an artificial reality environment, wherein the artificial reality apparatus is adapted to display a virtual indication based on the current operating mode of the controller as set by the user.

## Description

The present invention relates to a system for processing media signals, comprising a controller having at least one control element to be operated by the user to set an operating mode of the controller and a media processing unit for processing a media signal depending on the operating mode of the controller. Furthermore, the present invention relates to a method and a computer program for controlling media signals by using a controller.

For processing media signals, in particular audio signals or video signals, controllers are conventionally known as user input devices allowing a user to control several functions of the media processing unit. In a common setup frequently used for media processing in the prior art, a MIDI controller is connected by a MIDI interface to a media processing unit, which can be a computer running a suitable audio/video manipulation software, for example a DJ software, a digital audio workstation (DAW), a video editing software, a lighting/visuals software etc. The MIDI controller has several control elements such as control knobs, faders, buttons, etc., which may be operated by the user, and generates and/or receives MIDI data (e.g., via MIDI out or MIDI in ports respectively) in accordance with the operational mode of the controller as set by the user through the control elements. The media processing unit receives the MIDI data through the MIDI interface and carries out media processing in accordance with control commands represented by the MIDI data. In another conventional example, a DJ controller comprising one or more turntables or jog wheels may be connected through a MIDI interface to a computer, such as to transmit control signals regarding a current control event, including current control settings as set by the user on the turntable or the jog wheel, to a computer for further processing. In addition, audio signals output by the DJ controller, for example as picked up from a record played on the turntable, may be transmitted to the computer by using an audio interface, such as to allow the computer to manipulate the audio data or further distribute the audio data for playback, recording, etc. Control operations by the user as input at the DJ controller and transported via the MIDI interface to the computer may then command corresponding audio processing within the computer.

MIDI controllers as known in the prior art are typically hardware devices having a certain configuration with regard to the type and arrangement of the control elements in accordance with their dedicated function in the context of media processing, such that they have reduced flexibility with regard to changes of desired functions during the lifetime of use of the device. Some MIDI controllers have universal control elements, which can be assigned to different functions of the media processing unit by means of a software. However, such universal control elements (sometimes called soft keys) may be difficult to find and to operate for the user, as they do not have sufficient labels indicating their function as currently assigned by the software. Although some MIDI controllers may have integrated displays for labeling universal control elements, these displays have limited flexibility and increase the costs of the controller. Furthermore, even if a control element is sufficiently labeled, such labels at the controller usually have imminent limitations with regard to its content, and it is often difficult to recognize the exact value set by the control element from just viewing the label. As another disadvantage, the label is usually not responsive to any current operating mode of the system, such as a temporary unavailability of the operating parameter associated to a control element.

In view of the above background, it is an object of the present invention to provide a system, a method and a computer program for processing media signals using a controller, wherein user operation of the controller is assisted in various operating modes.

According to a first aspect of the present invention, this object is achieved by a system for processing media signals, comprising a controller having at least one control element to be operated by a user in a control event, a media processing unit for processing a media signal depending on the control event, an artificial reality apparatus adapted to provide visual input for the user to create an artificial reality environment, wherein the artificial reality apparatus is adapted to display a virtual indication based on the control event and/or based on the media signal.

According to an important feature of the present invention, an artificial reality apparatus is used to display a virtual indication based on the current control event, such that information regarding the control event can be displayed to the user in a very flexible way and nearly without any limitations with regard to type and content of the information, such as to assist the user in operating the controller. The user therefore does not have to rely on the presence or content of any labels presented at the controller hardware itself or as displayed on an internal display of the controller as known in the prior art, but may obtain additional information about a control event of the controller through the virtual indication generated by the artificial reality system, such that operation of the controller is assisted. Therefore, with the help of the virtual indication, control operations of controllers having poor labeling or even no labeling can be assisted. This further means that existing controller hardware can be retrofitted by additional labeling through the artificial reality apparatus according to the present invention, such that a sustainable way to manufacture a system according to the present invention is provided by reusing existing hardware.

Furthermore, according to the present invention, the artificial reality apparatus may be adapted to display the virtual indication based on an operating mode of the system. In the present disclosure, an operating mode refers to any current condition or state of operation of the system such as any current feature of the media processing, for example an identification of a piece of media or a media release package currently processed (i.e., a record currently played), a filter or effect setting, volume information of audio signals, equalizer settings, or any other value of an operating parameter related to the media processing. The virtual indication displayed by the artificial reality apparatus may thus represent a current value of an operating parameter related to the media processing, or a piece of music, or a music release package, or a waveform displaying a portion of the audio around a certain time interval, or a beat counter indicating the current beat phase within the song.

For example, according to another embodiment of the present invention, the control element is a playback section of the controller, preferably a turntable or a jog wheel of a DJ controller, wherein the current operating mode refers to a piece of music or a music release package currently played back by the playback section, preferably a music record currently played back, and wherein the virtual indication comprises a textual description or graphical representation of the piece of music or a music release package (a record, or a playlist, or any other bundle of pieces of music associated with one another and presented or released together). This allows a virtual indication of the current piece of music or the current music release package in particular for controllers which do not have any suitable display for displaying such information.

It should be noted that the controller in the context of the present disclosure is a piece of hardware, i.e., a hardware apparatus, dedicated for commanding manipulation of media signals, in particular audio signals or video signals. Therefore, the at least one control element is dedicated for commanding media processing, i.e., at least one of audio processing, audio manipulation, audio editing, audio playback, video/lighting processing, video/lighting manipulation, video/lighting editing, video/lighting playback. Preferably, the controller is a stationary device (not a handheld device), which is adapted, for example, to stand on a table, a tray, a rack, or similar basis or carrier, or to be mounted on a stand or tripod or any similar mounting element. In particular, the controller is not dedicated to control the artificial reality apparatus, i.e., does not have control elements dedicated for controlling basic functions of the artificial reality apparatus, such as starting or terminating apps or software for creating the virtual content to be displayed by the artificial reality apparatus. Furthermore, the controller preferably is not a computer keyboard and/or is not a computer mouse, and/or is not a general purpose computer input device, and/or is not a touchscreen, and/or is not a smartphone, and/or is not a tablet computer, and/or is not a laptop computer, and/or is not a general purpose computer, and/or is not a handheld device, and/or is not an artificial reality controller, and/or does not comprise an accelerometer, and/or does not comprise a gyroscope sensor. Instead, the controller according to the present invention is dedicated for controlling media processing, in particular audio and/or video processing.

For example, in one embodiment, the controller is a DJ controller having at least one control element to control playback of a piece of music. In another embodiment, the controller may be a controller for operating a digital audio workstation (DAW). In another embodiment, the controller may be a video editing controller having at least one control element for controlling a video editing operation of a video editing processor. In another embodiment, the controller may be a digital musical instrument. In another embodiment, the controller may be a mixing controller comprising two or more control elements which are hardware faders for controlling volume levels of different audio signals to be played together in a mix. In another embodiment, the controller may be a visual effect controller or a lighting controller having control elements, in particular hardware faders, for controlling the display of visuals or light effects.

According to an embodiment of the invention, the controller may be configured to generate a control signal upon operation of the control element, wherein the control signal indicates the control event, and wherein the artificial reality apparatus is preferably adapted to display the virtual indication based on the control signal. In this way, the system may quickly and reliably detect a current control event on the basis of the control signal provided by the controller such that a suitable virtual indication can be generated and displayed to the user.

In a further embodiment of the present invention, the at least one control element is adapted for physical manipulation by a user such as to be set to at least one of a plurality of control positions, wherein the media processing unit is adapted for processing the media signal depending on the current control position of the control element as set by the user, and wherein the artificial reality apparatus is adapted to display the virtual indication based on the current control position as set by the user. In this embodiment, the control event refers to a current setting of the control element to at least one of a plurality of control positions, for example a setting of a fader to a particular sliding position or a setting of a rotary knob to a particular rotating position or the setting of a button to a state. The virtual indication then may indicate the current control position to the user and thus assist the user during the control operation by providing labeling or additional information with regard to the current control position. By using the virtual indication, in particular a precise value of the current control position may be displayed to the user to provide substantive visual feedback during the control operation.

Preferably, the artificial reality apparatus may be configured to remove the virtual indication automatically, in particular, in a first example, after a certain amount of time, for example a time between 1 second and 20 seconds, after the last control event (if no further control event is detected), or, in a second example, as soon as the next control event for a different control element as the first control event is detected, such as to not unnecessarily obstruct the user's view.

The controller may be configured to provide a control signal that indicates the current control position as set by the user, which allows the artificial reality apparatus to display the virtual indication, such as to indicate the current control position in a reliable and quick manner. A control signal provided by the controller may have an advantageous double function, first, to inform the media-processing unit about the current control event, in particular about the current control position of the at least one control element, and therefore to allow the media-processing unit to process the media signal depending on the control event, and, second, to inform the artificial reality apparatus about the current control event, such as to allow the artificial reality apparatus to display a suitable virtual indication indicating the control event.

In another embodiment of the present invention, the controller is configured to set a media control parameter according to the current control event as set by the user, in particular the current control position of the control element, wherein the media processing unit is configured to process the media signal based on the media control parameter, and wherein the virtual indication represents a current value of the media control parameter. By indicating the media control parameter through the virtual indication, the user obtains direct feedback not just regarding the control position of the control element but regarding the actual media control parameter controlled by that control element. Since it is an aim of the user to actually control the media control parameter through the control element, user control of media processing is greatly assisted by the virtual indication of the media control parameter. In an example, the control position may be a value between 0 and 10 as displayed on a hardware label at the controller itself, the control signal may be a MIDI value between 0 and 127, and the media control parameter may be a Low-frequency band equalizer setting of -7 db.

In another embodiment of the invention, the control element may be a song selector, which may be operated by the user to select a particular piece of music or a particular music release package for playback from a plurality of different pieces of music or a plurality of different music release packages, wherein the virtual indication is a list of virtual song identifications identifying the different pieces of music or the different music release packages. By a virtual indication according to this embodiment, more extensive information such as lists of songs or records may easily be displayed at a convenient position in space in front of the user, regardless of the size and configuration of the controller.

In an embodiment of the present invention, the artificial reality system is an augmented reality (AR) system comprising a camera for capturing images of the user's real-world environment, including at least the controller, such that the user views camera images of the controller, and wherein the camera images are processed by the augmented reality system such as to add the virtual indication. An augmented reality system has the advantage that the user has complete and clear visual feedback of the controller as well as of the control movements of the user's hand during control through the camera, while adding the virtual indication can simply be realized through modification of the captured camera images based on conventional image processing algorithms.

In another embodiment of the present invention, the artificial reality system may be a mixed reality (MR) system configured to let the user see a mixture of light coming directly from the controller and light coming from the artificial reality environment including the virtual indication. A mixed reality system has the advantage that the user can see the controller directly and thus in a very natural way, for example through semi-transparent glasses, such that user acceptance is enhanced. At the same time, the virtual indication may easily be displayed on or projected by the semi-transparent glasses as known as such in conventional mixed reality technology.

In a further embodiment of the present invention, the artificial reality system is a virtual reality (VR) system in which substantially the entire visual input of the user over substantially the entire field of view of the user is provided by virtual content representing an artificial reality environment, wherein the virtual content may then comprise a virtual representation (a virtual counterpart) of the controller, as well as the virtual indication. The use of a virtual reality system has the advantage that the visual input of the user can be completely controlled by a computer, such as to flexibly change the artificial environment in all details, for example by changing also the visual appearance of the controller. When using a virtual reality system, a controller detecting apparatus may be provided for detecting controller position data such as position in space, shape and other geometric data, allowing the virtual reality system to display the virtual representation of the controller at the same position and with about the same shape as the real controller (the hardware controller), such as to guide the user's hand to find the controller and manipulate its control elements.

In a further preferred embodiment of the present invention, the system may comprise a gesture detecting apparatus configured to detect a hand position and a control gesture of a user's hand when operating the control element in the control event, wherein the system is configured to determine an estimated control element position, i.e., an estimated position of the control element currently operated by the hand of the user, based on the hand position upon detection of the control gesture, and the artificial reality apparatus is preferably configured to display the virtual indication at a virtual position in space that is determined based on the estimated control element position, more preferably at a virtual position in space that is attached to the estimated control element position. In such embodiment, positioning of the virtual indication can be made based on detection results of the gesture detecting apparatus as a touchless user interface. The inventors have found that the detection of both, hand position and control gesture, is advantageous for reliably detecting the position of the hand that is actually controlling the control element. While a user may have both hands at the controller at a point in time such that a mere detection of the hand position is not sufficient for deciding which hand is actually active in controlling the control element, additional detection of the control gesture allows a clear estimation of the position of the control element currently manipulated. In particular, when attaching the virtual indication at the estimated control element position (rather than the hand position), the virtual indication can more clearly be recognized as a kind of sophisticated or extended label of the control element. Furthermore, an unstable or flickering appearance of the virtual indication due to unpredictable hand movements can be avoided.

For example, the control gesture could be a hand gesture in which a distance of a tip of an index finger to the tip of a thumb of the hand is closer than 20 mm, in particular in combination with a linear movement of the hand, which may indicate a slider movement. In another example, the control gesture can be a button press gesture, which is detected when the index finger is straight and the middle and ring and little fingers are not straight, regardless of a posture of the thumb, wherein a finger may be detected as being straight, if a distance of the tip of the finger to the center of a palm of the hand is larger than 50 mm, for example.

In a preferred embodiment of the invention using the gesture detecting apparatus, the gesture detecting apparatus is configured to classify a detected gesture based on the control signal. In particular, since the control signal can provide information about the type of control element currently operated (e.g., slider or button or rotary knob), this additional information can increase detection accuracy of the gesture detection apparatus and, for example, avoid false positive gesture detection, if no control element is operated at all.

More specifically, after the system detects a control event based on the control signal, the system may categorize the control event as a button change or a slider/rotary knob change. On this basis, the system may observe the gestures performed by each hand and may decide if one of the hands is responsible for the control event. For example, if a control event has been detected, and if the system categorizes the control event as a slider change based on the control signal (typically the type control event is indicated in the MIDI data (the MIDI event) or it can be inferred from the mapping of the control signals to a software function, e.g. if it is mapped to control an EQ it is typically a rotary knob), and if at the same time the user's hand is performing a slider gesture, then the detected hand position during the detected control gesture is used to determine the estimate control element position of the control element currently manipulated. This has turned out to be a very robust detection mechanism to avoid false positives.

Preferably the gesture detecting apparatus comprises a camera adapted to capture images of the user's hand, and a gesture recognition unit configured to analyze the images captured by the camera to recognize a control movement of the user's hand when operating the control element. The camera may for example be mounted to a headset to be worn by the user.

According to another embodiment of the present invention, the system is configured to obtain controller position data representing at least one of a position in space of the controller, an orientation of the controller in space, a size of the controller, and a position in space of the control element, a position in space of a display area of the controller, a position in space of a display area of the control element, and a position in space of a predefined feature of the controller.

In the above embodiment, the system obtains information regarding a positional information and/or geometric information about the controller or its control elements. Based on the controller position data, the artificial reality apparatus may then display the virtual indication at a suitable position within the artificial reality environment presented to the user, such that the virtual indication is displayed at a suitable position relative to the controller.

In particular, the artificial reality apparatus may be configured to display the virtual indication at a virtual position in space that is determined based on the controller position data, preferably such as to display the virtual indication as being apparently associated to one or more items selected from: the controller, an outline of the controller, the control element, an outline of the control element, a display area of the controller and a display area of the control element. The user can then clearly recognize that the virtual indication belongs to the respective item. In addition, or alternatively, the virtual indication may be displayed as covering at least one of the above-mentioned items, such that the item is masked, outlined, colored or in any other way modified with regard to its appearance to the user, such as to show the virtual indication. When the virtual indication is apparently associated to one of the above items, the virtual indication may in particular be apparently attached to the item, such as to be displayed as being in fact positioned at the respective item. The user therefore reliably recognizes the virtual indication as referring to the respective item. Furthermore, the virtual indication may be separated from some distance from the item but still apparent to the user as being associated to the item, for example if the distance between the virtual indication and the item is smaller than a size of the item as apparent for the user. An association between the virtual indication and the item may also be defined by the virtual indication moving together with the item, for example a virtual indication moving together with the slider of a fader or the virtual indication changing its content or otherwise its appearance together with a current manipulation of the control element by the user.

The embodiment discussed above may in particular be advantageous when the virtual indication is displayed such as to cover a display area of the controller or a display area of the control element. In particular, some free space or free surface portion of the controller or the control element may be used by the system according to the embodiment of the present invention as a display area where a virtual indication may be projected at by the artificial reality apparatus. In this way, the virtual indication may be shown without obstructing visibility of the controller such that operation of the controller is not disturbed by the virtual indication. Furthermore, a controller or a control element according to an embodiment of the present invention may comprise a dedicated display area, for example a plain area left blank on the controller housing, in order to provide an area for the virtual indication to be projected at by the artificial reality apparatus.

According to another embodiment of the present invention, the system may further comprise a controller detecting apparatus configured to detect the controller position data. The controller detecting apparatus may comprise a camera viewing the controller and capturing images of the controller which may be analyzed to identify controller position data, for example through image processing and image analyzing algorithms known as such in the prior art. The camera may be suitably positioned in space and for example be mounted to a headset of the user, wherein the position in space of the camera is preferably known to the system through a suitable calibration of the camera before use. Preferably, the camera may also be used as the camera for an augmented reality system for capturing the images of the real-world environment to be viewed by the user as described above for the embodiment using an augmented reality system. Alternatively, the controller position data may be input by the user via a suitable user interface into the system before use of the system. As a further alternative, controller position data may be transmitted with the control signal directly from the controller. For example, the control signal may include information concerning a type of the controller (model identification, etc.) and the system may obtain controller position data such as size or arrangement of control elements, from the information about the controller type, for example by looking up controller specifications via internet. The control signal may, in addition to the value of a control element (e.g., 0-127) also include information regarding the relative location of a control element on the controller.

In a further embodiment of the present invention, the artificial reality apparatus may be configured to display the virtual indication at a virtual position in space that is associated with a gaze direction of the user's eyes. For this purpose, a gaze direction detection algorithm may be used, which analyzes camera images captured by a camera viewing the user's eyes. In this way, it can be ensured that the virtual indication is in the user's focus, for example if an important message is to be displayed as the virtual indication.

In a preferred embodiment of the present invention, the controller is a MIDI controller. This means that the controller preferably operates and provides control signals in accordance with the MIDI (Musical Instrument Digital Interface) standard as maintained by the MIDI Manufacturers Association (MMA). Thus, the system can be used for the most common types of media controllers, in particular all types of professional and semi-professional audio/video processing equipment.

In another embodiment of the present invention, the controller is connected to the computer by using a digital interface, preferably a digital interface according to at least one of the following standards: the MIDI standard, the HID standard (Human Interface Device standard), the DVS/time code standard (Digital Vinyl/time code standard), wherein the computer is configured to receive the control signal via the interface and to control the artificial reality apparatus to display the virtual indication based on the control signal.

By providing a computer as in the above-described embodiment, a large part or the entire processing work, optionally including the media processing work, may be performed by a computer, such as a standard desktop computer, a tablet computer, a smartphone or a dedicated media computer, such that sufficient computing resources may be provided through standard computer technology, whereas the controller itself may have reduced computing resources or may even have no computing resources in order to reduce the costs or the weight of the controller. Furthermore, the controller may have dedicated computing resources, such as dedicated processors, for the specific control tasks of the media processing, which are controlled by the controller, while other functions that also depend on the operating mode as set by the user at the controller may be carried out by the computer based on the control signal received via the digital interface.

The digital interface is preferably a wireless digital interface avoiding the need to connect the controller and the computer via cables. Preferably, a Bluetooth connection or a WLAN connection is used as the wireless digital interface, which are configured according to the IEEE standard.

The present invention will further be explained based on the following preferred embodiment, which is described with respect to the drawings, in which
- Fig. 1: is a schematic illustration of a system for processing audio signals according to the embodiment of the present invention,
- Fig. 2: shows the controller and a first type of virtual content according to the embodiment of the invention,
- Fig. 3: shows the controller and a second type of virtual content according to the embodiment of the present invention, and
- Fig. 4: shows the controller and a third type of virtual content according to the embodiment of the present invention.

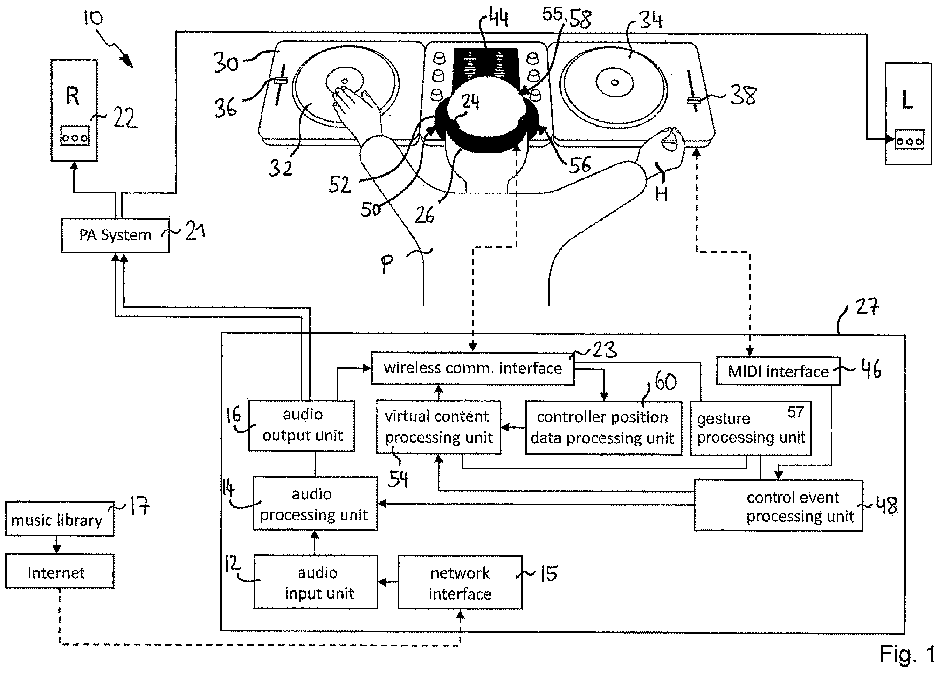

With reference to Fig. 1, a system 10 for processing audio data according to the first embodiment of the present invention generally comprises an audio input unit 12, an audio processing unit 14 and an audio output unit 16. Audio input unit 12 is configured to receive input data, which are audio data representing a piece of music such as a song, for example via streaming through a network interface 15 of the system 10 via the Internet from a remote music library 17, which may be a commercial music distribution platform (for example Apple Music or Spotify). Alternatively, audio input unit 12 may receive audio data from a local storage device, for example a local hard drive integrated in or connected to the system 10. The piece of music may be provided to or by the audio input unit 12 in any conventional digital format, in particular standard audio formats, such as MP3, WAV, AIFF, etc. The audio data may be provided in a decompressed format and/or audio input unit 12 may include a decompressor for decompressing audio data received in compressed format.

Audio processing unit 14 is preferably connected to audio input unit 12 to receive audio data from audio input unit 12 and is configured to process the audio data and send the audio data to output unit 16 for output. Audio processing unit 14 preferably controls playback of audio data, i.e., starts playback, stops playback, or sets or changes playback position along the playback time axis. Furthermore, audio processing unit 14 preferably is capable of changing playback rate (playback velocity) of the audio data relative to the normal playback rate as defined by the input data, based on a predetermined desired playback rate, by suitably resampling the audio data and thereby stretching or compressing the audio data along the time axis. Moreover, audio processing unit 14 preferably is capable of changing playback direction of the audio data from normal forward playback to reverse playback, according to a predetermined desired playback direction.

Audio processing unit 14 may further modify the input data, for example by applying filters, audio effects, or equalizers, or by mixing the input data with other audio data, for example with audio data of another piece of music, etc.

Audio processing unit 14 preferably receives audio data of two or more different pieces of music, i.e., first audio data of a first piece of music and second audio data representing a second piece of music. Audio processing unit 14 may then have a mixing unit for mixing the first audio data with the second audio data such as to obtain mixed audio data. Mixing of the audio data may be carried out at different volume ratios, such that the audio data output by audio processing unit 14 may predominantly or exclusively include the first audio data or the second audio data or any mixture thereof, depending on the setting of a crossfader.

Audio output unit 16 is configured to receive the output data from audio processing unit 14 and to process it for sound output. For this purpose, audio output unit 16 may include a digital-to-analog converter for converting the digital output data into analog audio signals and may be connected to a PA system 21 having a pair of speakers 22 such as to make the output data audible, for example for an audience. Furthermore, audio output unit 16 is preferably connected to a communication interface, in particular a wireless communication interface 23, for transmitting the output data or the audio signals obtained from audio output unit 16 to headphones 24 of a headset 26 wearable on a head of a user P, such as to make the output data audible for the user P. Preferably, system 10 is configured for processing stereo or multi-channel audio data, such that audio output unit 16 outputs the audio signals via at least two channels (in particular two stereo channels) including a left channel and a right channel sent to left and right speakers 22 or left and right sides of headphones 24, respectively. In this way, stereophonic or spatial audio may be provided.

One or more of the above-described components as well as the components described below may be implemented by a computer 27, which includes a microprocessor, a volatile memory, i.e., a random-access memory (RAM), a nonvolatile memory, i.e. a read-only memory (ROM) or a hard drive (HDD) or solid-state drive (SSD), and connectivity means, for example a wireless network interface (e.g. a Bluetooth interface or a WLAN interface), or a USB interface. Computer 27 may be a standard tablet computer, a smartphone or a desktop computer, and it may be carried on with the user P or disposed at a distance to user P. Computer 27 may be integrated into headset 26. In another embodiment, computer 27 may be implemented as a plurality of separate processing units, parts of which being carried on with the user P and other parts being disposed stationary and/or remote with respect to the user, wherein the processing units are connected to one another by wireless connections (e.g., Bluetooth) or wire-based connections (e.g. USB) such as to implement the functions of the system 10 as described herein above and below.

Functions and operations of the audio processing unit 14 may be controlled by user P through a controller 30, which is a hardware device, comprising several control elements adapted to be physically manipulated and thereby operated by the user P. In the present example, controller 30 is a DJ deck comprising a first jog wheel 32 for controlling playback (start/stop of playback, playback speed and playback direction) of a first piece of music and preferably a second jog wheel 34 for controlling playback (start/stop playback, playback speed and playback direction) of a second piece of music. DJ deck 30 may further have a first tempo slider 36, which can be linearly slid in order to adjust a playback speed of the first piece of music and/or a second tempo slider 38 that can be linearly slid by the user in order to adjust a playback speed of the second piece of music. DJ deck 30 may further have at least one rotating knob 40, for example for adjusting equalizer settings. As can be seen in Fig. 1, DJ deck 30 may have three rotating knobs for setting the gain of a low-frequency band, a middle-frequency band and a highfrequency band for the first piece of music and three further rotating knobs for setting the gains of a low-frequency band, a middle-frequency band and a highfrequency band of the second piece of music, respectively. The above-mentioned control elements are just examples, and the DJ controller may comprise other or additional control elements for controlling the same or other functions.

Furthermore, DJ controller 30 has a crossfader 42, which is a linear slider that can be moved between a left end position and a right end position. Crossfader 42 can be controlled by user P to set a ratio between a volume level of the first piece of music and a volume level of the second piece of music such that the volume of the first piece of music is maximum and the volume of the second piece of music is minimum when the crossfader is at the left end position, and the volume of the first piece of music is minimum, and the volume of the second piece of music is maximum when the cross-fader 42 is at the right end position, and wherein the volume levels of the first and second pieces of music are continuously increased or decreased in opposite directions to one another when moving the crossfader 42 between its end positions. In this way, user P can play a smooth transition or crossfade from playback of the first piece of music to playback of the second piece of music or vice versa.

DJ controller 30 may further have a display area 44, which is an empty surface on a top side of a housing of the DJ controller 30, for example, i.e., an area where no control elements and no labels or decoration is positioned. When viewed with the naked eye, i.e., without any artificial reality equipment, display area 44 appears to be empty.

DJ controller 30 is connected to computer 27 by using a wireless MIDI connection or a wired MIDI connection using a MIDI cable. Preferably, a Bluetooth connection is used based on the IEEE Bluetooth standard, wherein the MIDI data exchanged between DJ controller 30 and computer 27, which form a control signal in the sense of the present invention, are formatted according to the MIDI standard.

MIDI data from DJ controller 30 are received by computer 27 in a MIDI interface 46 from which the MIDI data are passed to a control event processing unit 48, which interprets the MIDI data, such as to obtain therefrom information regarding a current control event of the DJ controller 30. In particular, control event processing unit 48 may determine a current control position of one of the control elements 32-42 described above as currently set by the user P. Furthermore, control event processing unit 48 may store a mapping list containing information about different audio control parameters being assigned to the different control elements 32-42, respectively. Based on the mapping list, the control event processing 48 unit may then set a current value of an audio control parameter in accordance with the current control position of a control element 32-42 assigned to this particular audio control parameter. The audio control parameter is then passed to audio processing unit 14 such as to command audio processing unit 14 to modify processing of the audio signal depending on the audio control parameter. Processing of the audio data within audio processing unit 14 is therefore controlled by user P through manipulation of the control elements 32-42 of DJ controller 30 as known as such in the prior art for MIDI controllers.

According to the embodiment of the present invention, the audio control parameter as determined by control event processing unit 48 based on the MIDI data received from DJ controller 30 are also passed to a virtual content processing unit, which forms part of an artificial reality apparatus 50. In the present embodiment, artificial reality apparatus 50 is a mixed reality apparatus (MR apparatus) 50 comprising a semi-transparent display 52 mounted to the headset 26, wherein the semi-transparent display 52 allows light from the real world to pass through and being viewed by user P and, at the same time, displays virtual content to be viewed by the user P to present an artificial environment that is overlaid in the field of view of user P with the view of the real world. The virtual content to be displayed by the MR display 52 of headset 26 may be generated by a virtual content processing unit 54 of computer 27 and may be transmitted to the headset 26 through a wireless communication using wireless communication interface 23. User P may then see both the real controller 30 as being operated in the real world by the hands of user P through physical manipulation as well as virtual content as displayed or projected by the MR display 52 of headset 26, such as to be visible within the space in front of user P as overlaying the real-world environment.

According to a preferred feature of the present invention, the virtual content displayed by MR headset 26 depends on a control event of the DJ controller 30 or on an operating mode of the system 10. For this purpose, the virtual content processing unit 54 may receive data from control event processing unit 48 such as the audio control parameter or data representing a control event of controller 30, in particular data representing a control position of any of the control elements 32-42. Based on the data received from control event processing unit 48, virtual content processing unit 54 may generate a virtual indication, for example a virtual label containing text or graphical information related to the current control event of the controller 30. Furthermore, virtual content processing unit 54 may receive data from audio processing unit 14 as regards a current audio processing, for example, information regarding the piece of music currently played back or regarding actual values of audio control parameters, etc. Based on the data obtained from audio processing unit 14, virtual content processing unit 54 may generate virtual content, such as a virtual indication, for example containing text information or graphical information, which represent a current operating mode of audio processing unit 14, for example the piece of music currently played back.

The virtual content, i.e., the virtual indication, generated by the virtual content processing unit 54, is preferably displayed by MR headset 26 at a suitable position related to the control event, for example related to a position of the user's hand manipulating the control element 32-42 that has generated the control signal, and/or related to a position of that control element 32-42 itself. The system 10 may therefore include at least one of a gesture detecting apparatus 55 and a controller detecting apparatus 56, as will be explained below.

The system may include the gesture detecting apparatus 55 for detecting a position, a posture and a movement of a hand H of the user, and for recognizing hand gestures. Gesture detecting apparatus 55 may in particular include a camera 58 configured and positioned to capture images of a hand H of a user P. Camera 58 may be mounted to MR headset 26 and may for example be integrated into a display of headset 26. Alternatively, camera 58 may be disposed at some distance to the user P and directed such as to view the user's hand H.

Gesture detecting apparatus 55 may further comprise a gesture processing unit 57 which may be provided by computer 27 and may include an image-processing unit, which receives images captured by a camera 58 and a gesture-recognition unit, which receives images processed by the image-processing unit. The gesture processing unit 57 is adapted to analyze the images captured by the camera 58 in order to recognize at least one control gesture. Interpretation of the camera images or camera videos may be based on an appearance-based model using a template database. For example, gesture processing unit 57 may compare images or sequences of images captured by camera 58 with reference images or reference image sequences taken from the template database, wherein the reference images or reference image sequences show particular known control gestures of the same or another user, which have been previously captured by the same or a different camera in a training procedure. Based on a difference between the currently captured images of a hand H of a user P and the reference images or reference image sequences, gesture processing unit 57 may classify hand gestures and eventually decide whether a current hand gesture resembles a particular reference gesture and therefore is classified as a particular control gesture.

In other embodiments of the invention, gesture detection apparatus 55 may use other concepts of gesture detection, for example based on data captured by 3D cameras such as stereo cameras or depth-aware cameras. Suitable algorithms for interpretation of 3D camera data are volumetric or skeletal models. Furthermore, electromyography-based models interpreting electrical signals produced by muscles in the body or data obtained from wired gloves may be used. In other words, a touchless user interface (TUI) is preferably used for gesture detection, i.e., an interface obtaining data related to hand gestures without physically touching a hardware controller, such as a handheld controller, a keyboard, a mouse, or a screen.

Alternatively or in addition, gesture detecting apparatus 55, may include an artificial intelligence unit (not shown in Fig. 1), which may comprise a neural network trained to recognize particular control gestures. The neural network may be trained using training data, which comprise images or image sequences of a hand gesture and associated identification of a particular control gesture. After training, the trained neural network is then able to classify a new hand gesture observed by the gesture detecting apparatus 55 and to decide whether or not the new hand gesture corresponds to a particular predefined control gesture.

When the control event processing unit 48 detects a control event and the gesture detecting apparatus 55 detects a predefined control gesture, the system preferably determines an estimated control element position based on the hand position detected by the gesture detecting apparatus 55 during the control gesture, and the MR apparatus 50 (headset 26) displays the virtual indication indicating the control event at a position in space attached to the estimated control element position.

Optionally, the system 10 may further obtain controller position data representing positional information of the controller 30 or parts of the controller 30 or geometric information regarding the controller 30, such that virtual content processing unit 54 may generate the virtual content as being positioned in the artificial environment at a position depending on the controller position data.

Preferably, the controller position data are detected by a controller detecting apparatus 56, which may comprise the camera 58 mounted to headset 26, such as to view an area in front of the user, and a controller position data processing unit 60, preferably included in computer 27. Camera 58 captures images of the controller 30, which are transmitted through the wireless connection and the wireless communication interface 23 to controller position data processing unit 60. Controller position data processing unit 60 is configured to analyze the pictures taken by camera 58, such as to identify the controller 30 and determine controller position data through a suitable object recognition algorithm. Recognition of the controller 30 within the camera image may be assisted by data regarding the type of the controller, which may be obtained from the MIDI data or from a driver software installed for controller 30 on computer 27, or via user input through a user interface (for example a user interface of computer 27), wherein computer 27 may determine controller position data based on the controller type through reading out controller specifications stored in a database, for example a database accessed via Internet and network interface 15.

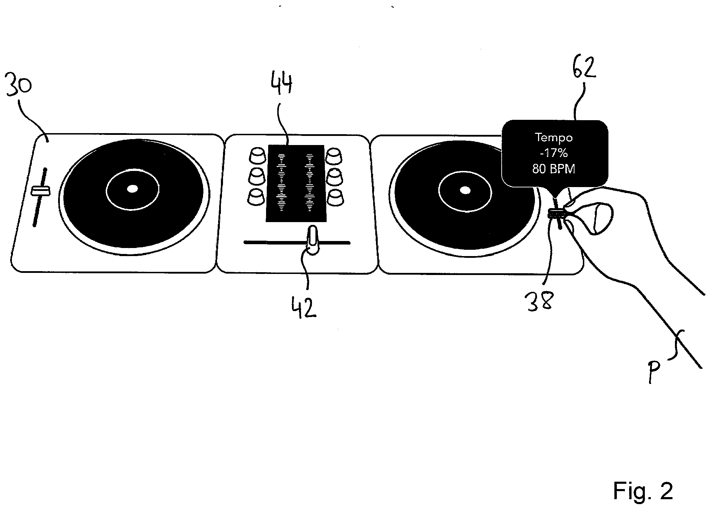

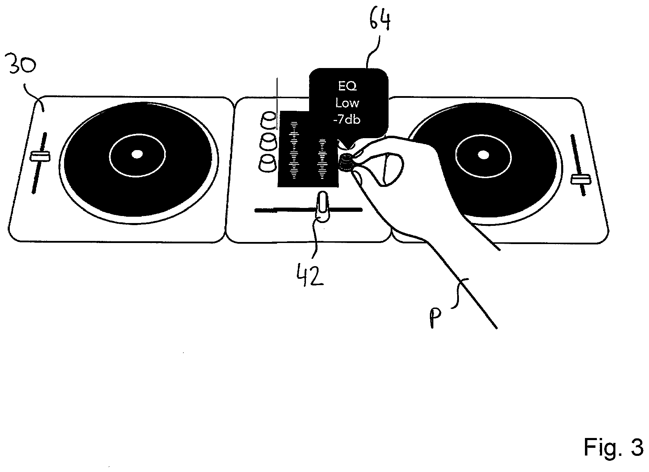

Figs. 2 and 3 illustrate examples of virtual content as generated by virtual content processing unit 54 and displayed by MR headset 26 to the user P during an example mode of operation. In particular, in the example shown in Fig. 2, a user is manipulating the tempo slider 38 associated to the second piece of music by physically touching and moving the slider 38 to a desired position. Controller 30 therefore generates and outputs MIDI data identifying (1) which control element is manipulated, i.e., tempo slider 38, and (2) the current control position of the control element. The MIDI data are transmitted via the wireless Bluetooth connection to MIDI interface 46 of computer 27 and interpreted in control event processing unit 48, such as to generate the command that the tempo of the second piece of music is to be set to a particular value, for example 80 bpm. The tempo setting is transmitted as an audio control parameter to audio processing unit 14, which is consequently operated to process the audio data of the second piece of music in such a manner as to set the playback speed of the second piece of music at the desired value, e.g., 80 bpm. Consequently, the second piece of music is output via audio output unit 16 and PA system 21 and/or headphones 26 with a tempo of, e.g., 80 bpm. At the same time, the desired audio control parameter relating to the desired tempo of, e.g., 80 bpm is transmitted from control event processing unit 48 to virtual content processing unit 54, which generates a virtual indication based on the current setting of the tempo. In the present example, the virtual indication is a virtual label containing text information stating that the tempo is reduced by 17 % with regard to normal playback speed and is now set to 80 bpm, for example.

The users hand gesture when manipulating the tempo slider 38 has been observed by gesture detecting apparatus 55 as comprising a pinching gesture or a gripping gesture combined with a linear movement of the hand H of the user. Furthermore, the gesture processing unit 57 receives an information from control event processing unit 48 regarding a current control event which is classified as a slider control event. In combination, the gesture detecting apparatus 55 decides that the detected hand gesture is a control gesture and consequently determines an estimated control element position, namely the estimated position in space of the tempo slider 38, based on the detected hand position during the control gesture. That estimated position of the tempo slider 38 is then transmitted to the virtual content processing unit 54 such that the virtual content processing unit 54 may generate the virtual label 62 at a position in space that is attached to the position in space of the tempo slider 38.

Thus, as can be seen in Fig. 2, the virtual label 62 may be displayed by the MR apparatus 50 at a position in space that is associated to or even attached to the tempo slider 38, such that the user immediately recognizes the virtual label 62 as referring to the current setting of the tempo slider 38.

To achieve such convenient positioning of the virtual label 62 near tempo slider 38, controller detecting apparatus 56 may alternatively or additionally have obtained sufficient controller position data regarding a position in space of the controller 30 and/or a position in space of the tempo slider 38, through interpretation of images captured by camera 58 or based on information obtained from the MIDI data or based on information about the controller type or any combination thereof.

In the example shown in Fig. 3, the user operates a rotating knob 40 associated to setting an equalizer of the audio processing unit 14. For example, the user P currently sets the gain of a low-frequency band of the equalizer assigned to the second piece of music to a value of -7 db. The desired equalizer setting is transmitted from controller 30 to computer 27 through the MIDI connection to control the audio processing unit 14 according to the desired equalizer setting as well as to generate a second virtual label 64 to be displayed via MR processing apparatus 50 in the same manner as explained in more detail above for the first virtual label 62. Again, the second virtual label 64 contains text or graphic information regarding the current equalizer setting as commanded by user P and is displayed at a position in space that is associated to or even attached to the position in space of the control element, i.e., rotating knob 40, currently operated by the user.

As can be seen in Figs. 2 and 3, in addition to providing the virtual labels 62, 64, the virtual content displayed by MR apparatus 50 may further include highlighting or masking one of the control elements 38 and 40, respectively, by overlaying a virtual indication having the shape of the respective control elements 38, 40 or a similar shape, such that the control elements 38, 40 appear as being highlighted during an active user manipulation. This provides additional feedback for the user P regarding the current control operation.

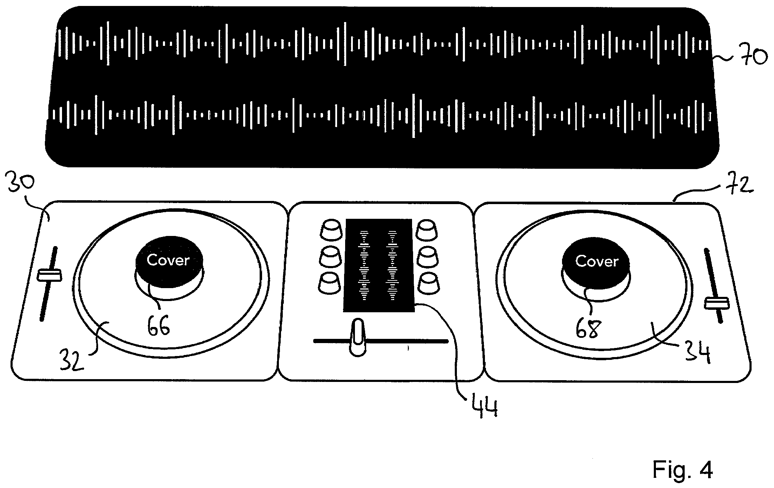

Fig. 4 shows another example for a virtual indication as provided by the system 10 according to the embodiment of the present invention. In this example, a first virtual cover representing the first piece of music or representing a first record being currently played back by DJ controller 30 is displayed as a virtual indication by MR apparatus 50 at a position such as to overlay the first jog wheel 32. Likewise, a second virtual indication 68 indicating a second piece of music or a second record currently played back by DJ controller 30 may be displayed as a virtual indication by MR headset 50 at a position such as to overlay the second jog wheel 34. First and second indications 66 and 68 may each contain textual and/or graphical information, for example based on the original record covers of the records played back. Therefore, the surfaces of the jog wheels 32 and 34 of the DJ controller 30 may be used as display areas for projecting virtual content when the DJ controller 30 is viewed through the MR headset 26. The display areas may also be used to display other information regarding the current operating mode of system 10, for example current values of audio parameters. Preferably, the first virtual indication 66 and/or the second virtual indication 68 is displayed by MR apparatus 50 such as to rotate in accordance with the current playback speed and to stop rotation when playback is stopped. In this manner, additional optical feedback is provided for the user P with regard to the current playback settings of the first and/or second record.

As can further be seen in Fig. 4, display area 44 may be used by MR apparatus 50 to display virtual content thereon. In the present example, a graphical representation of the waveform of the audio signals currently played back are projected onto display area 44 as virtual indications of the audio data currently played back and thus a current operating mode of controller 30. The waveform display by the MR apparatus 50 may change in real-time together with a change in the audio data, for example as commanded by jog wheels 32, 34 through a scratching operation of the user. Furthermore, the waveforms of the audio signals may be shown as another virtual indication in a virtual window 70 that is associated to an outline 72 of the controller 30 and has dimensions in accordance with the size of the controller. Therefore, a relatively large display can be provided independent from any spatial constraints set by the size and configuration of the DJ controller 30.

## Claims

1. System for processing media signals, comprising
- a controller having at least one control element to be operated by a user in a control event,
- a media processing unit for processing a media signal depending on the control event,
- an artificial reality apparatus adapted to provide visual input for the user to create an artificial reality environment,
wherein the artificial reality apparatus is adapted to display a virtual indication based on the control event and/or based on an operating mode of the system.

2. System according to claim 1, wherein the controller is configured to generate a control signal upon operation of the control element, wherein the control signal indicates the control event, and wherein the artificial reality apparatus is preferably adapted to display the virtual indication based on the control signal.

3. System according to claim 1 or claim 2, wherein the at least one control element is adapted for physical manipulation by a user such as to be set to at least one of a plurality of control positions, wherein the media processing unit is adapted for processing the media signal depending on the current control position of the control element as set by the user, and wherein the artificial reality apparatus is adapted to display the virtual indication based on the current control position as set by the user, and wherein the control signal preferably indicates the current control position as set by the user.

4. System according to at least one of the preceding claims, wherein the controller is configured to set a media control parameter according to the current control event, in particular the current control position of the control element, wherein the media processing unit is configured to process the media signal based on the media control parameter, and wherein the virtual indication represents a current value of the media control parameter.

5. System according to at least one of the claims 2 to 4, wherein the media processing unit is configured to process the media signal based on the control signal.

6. System according to at least one of the preceding claims, wherein the control element is a playback section of the controller, preferably a turntable or a jog wheel, wherein the current operating mode refers to a piece of music or a music release package currently played back by the playback section, preferably a record currently played back, and wherein the virtual indication comprises a textual description or graphical representation of the piece of music or the music release package.

7. System according to at least one of the preceding claims, wherein the artificial reality system is one of
- an augmented reality system comprising a camera for capturing images of the user's real-world environment, including at least the controller, such that the user views camera images of the controller, and wherein the camera images are processed by the augmented reality system such as to add the virtual indication,
- a mixed reality system configured to let the user see a mixture of light coming directly from the controller and light coming from the artificial reality environment including the virtual indication,
- a virtual reality system in which substantially the entire visual input of the user over substantially the entire field of view of the user is provided by virtual content of the artificial reality environment, wherein the virtual content comprises a virtual controller and the virtual indication.

8. System according to at least one of the preceding claims, further comprising a gesture detecting apparatus configured to detect a hand position and a control gesture of a user's hand when operating the control element in the control event, wherein the system is configured to determine an estimated control element position based on the hand position upon detection of the control gesture, and the artificial reality apparatus is preferably configured to display the virtual indication at a virtual position in space that is determined based on the estimated control element position, more preferably at a virtual position in space that is attached to the estimated control element position, wherein the gesture detecting apparatus is preferably configured to classify a detected gesture of a hand of the user based on the control signal.

9. System according to at least one of the preceding claims, wherein the system is configured to obtain controller position data representing at least one of
- a position in space of the controller
- an orientation of the controller in space,
- a size of the controller, and
- a position in space of the control element,
- a position in space of a display area of the controller,
- a position in space of a display area of the control element,
- a position in space of a predefined feature of the controller.
wherein the artificial reality apparatus is preferably configured to display the virtual indication at a virtual position in space that is determined based on the controller position data.

10. System according to any of the preceding claims, wherein the artificial reality apparatus is configured to display the virtual indication as being apparently associated to and/or covering at least one of
- the controller,
- an outline of the controller,
- the control element,
- an outline of the control element,
- a display area of the controller,
- a display area of the control element.

11. System according to claim 9 or claim 10, further comprising a controller detecting apparatus configured to detect the controller position data.

12. System according to at least one of the claims 9 to 11, wherein the system is configured to obtain the controller position data based on data received from the controller, in particular based on the control signal.

13. System according to at least one of the preceding claims, wherein the artificial reality apparatus is configured to display the virtual indication at a virtual position in space that is associated with a gaze direction of the user's eyes.

14. System according to at least one of the preceding claims, wherein the controller is a MIDI controller.

15. System according to at least one of the preceding claims, further comprising a computer, wherein the controller is connected to the computer by using a digital interface, preferably a digital interface according to at least one of the following standards:
- the MIDI standard,
- the HID standard,
- the DVS/time code standard,
wherein the computer is configured to receive the control signal via the interface and to control the artificial reality apparatus to display the virtual indication based on the control signal,
wherein the digital interface preferably is a wireless digital interface, more preferably a Bluetooth connection or a WLAN connection.

16. Method for processing media signals, comprising
- operating at least one control element of a controller by a user in a control event,
- processing a media signal depending on the control event,
- operating an artificial reality apparatus to provide a visual input for the user to create an artificial reality environment,
wherein the artificial reality apparatus displays a virtual indication based on the control event and/or based on an operating mode of the system,
wherein the method preferably uses a system of at least one of claims 1 to 15.

17. Computer program product, which when run on at least one computer, is adapted to operate a system of at least one of claims 1 to 15 or to carry out the method according claim 16.
